# EUROPEAN PATENT SPECIFICATION

(11) **EP 4 360 852 B1**
(45) Date of publication and mention of the grant of the patent: **15.04.2026**
(21) Application number: 22203930.7
(22) Date of filing: 26.10.2022
(51) Int. Cl.: B29C 51/06, B29C 51/10, B29C 51/26, B29C 35/08

(54) **VACUUM FORM TOOLING**
VAKUUMFORMWERKZEUG
OUTILLAGE DE FORMAGE SOUS VIDE

(43) Date of publication of application: 01.05.2024
(73) Proprietor: 3CON Anlagenbau GmbH, 6341 Ebbs (AT)
(72) Inventor: Auer, Hannes, 6334 Schwoich (AT)
(74) Representative: Flach Bauer & Partner Patentanwälte mbB

(56) References cited:
- EP-B1- 1 343 627
- GB-A- 1 131 361
- JP-A- 2015 058 547
- JP-A- S6 315 726
- JP-B2- 5 991 590

## Description

### Field of the invention

The invention relates to a vacuum form tooling for a press lamination system or for a vacuum lamination system, to a press lamination system including said vacuum form tooling and to a vacuum lamination method.

### Background

Vacuum lamination is a manufacturing method for lamination of raw carriers based on materials with surface decorations in a wide variety of colors and haptics. The vacuum lamination manufacturing method is commonly used for manufacturing all kind of laminated parts in different fields of industry, including packaging, automobile and the like. Particularly cladding parts can be formed e.g. of vehicle cabins, such as instrument panels, center consoles, seat back panels and/or door trims. Particularly, in vacuum lamination, a carrier (also denoted as substrate) is bonded to a film by means of an adhesive system applied either to the substrate, the film or both.

Further, vacuum forming is known. Vacuum forming is a manufacturing method for forming thermoplastic films to a specific shape in a mold. Therefore, the film is heated to a high-enough temperature that permits the film to be stretched into or onto a mold and cooled to a finished shape. Thereby a molded film part is formed. Depending on the thickness of the molded film, using thin films e.g. disposable cups, containers, lids, trays, blisters, clamshells, and other products for the food, medical, and general retail industries can be formed. Likewise, using thick film, parts as diverse as (or substrates for) vehicle door and dash panels, refrigerator liners, utility vehicle beds and plastic pallets and/or the like can be molded.

Typical films used for vacuum lamination and/or vacuum forming are thermoplastic films having a thickness from 0.1 to 12 mm. Thermoplastic materials include, but are not limited to acrylonitrile butadiene styrene, ABS, high-impact polystyrene, HIPS, polypropylene, PP, polyethylene, PE, polyvinyl chloride, PVC, and thermoplastic olefin, TPO. Further, composite films can be used for vacuum lamination and vacuum forming. The films may allow for the imitation of natural materials such as wood or leather, or for providing other desired haptic and/or optical appearances.

To ensure that the film adheres to the substrate (in vacuum lamination) as tightly as possible, or is properly molded onto a molding tool (in vacuum forming), i.e. substantially free of bubbles and wrinkles, the film is typically heated before or during lamination/forming. Further, in vacuum lamination, as adhesives such as hotmelt adhesives, or reaction hotmelt adhesives may be used, which have to be heated to a certain temperature to obtain ideal adhesion. It is to be understood, that in vacuum lamination other types of adhesives may also be used, such as solvent based adhesives or (water based) dispersion adhesives.

To apply the film on the substrate or a molding tool, respectively, the film is typically arranged in a clamping frame prior to heating. After the subsequent heating step, a tool that supports the substrate/the molding tool and that is arranged underneath the clamping frame and accordingly underneath the heated film is lifted. Due to the lifting movement, the heated film is formed over the substrate/the molding tool, thereby molding itself to the shape of the substrate and/or the molding tool. The molding is supported by a vacuum applied to the tool so that the heated film is sucked onto the tool, respectively on the substrate and/or the molding tool. For this purpose, the tool and respectively the substrate/the molding tool must have the appropriate air permeability, usually achieved by means of correspondingly small holes or pores, to enable the film to be sucked in by means of said vacuum.

As the film is sucked on the substrate/molding tool, it will be stretched dependent on the shape of the substrate/molding tool. This shape-related degree of stretching of the film, typically results in different film thicknesses over the outer shape of the substrate/ molding tool. Further, the different degrees of stretching may impact the optical appearance and the haptic of the final work piece, including substrate and film, or the formed film, only. This is oftentimes undesirable.

Further, as the tool is arranged underneath the clamping frame and accordingly underneath the heated film and then lifted, for large work pieces, particularly for work pieces with a large vertical expansion, plenty of space is required underneath the clamping frame. Oftentimes, the vacuum lamination or forming systems cannot be installed on flat surface factory buildings, but must be installed over respective pits allowing the required vertical lifting and lowering of the large tool/substrate.

Document GB 1 131 361 suggests a method of making a hollow article from two sheets of thermoplastic material, each of which contains a hemispherically shaped cavity. The hemispherically shaped cavities are formed by heating each sheet of thermoplastic material until it has softened sufficiently to enable it to be vacuum-formed, applying to one surface of the softened sheet a first forming tool having a shape to form said sheet into domed form and applying to the other surface of the sheet a second forming tool having a shape to form the domed sheet into its final hemispherically shaped form.

Thus, there is a need in the art to provide an improved tooling for vacuum lamination that overcomes the aforementioned drawbacks.

### Summary

The object is achieved by a vacuum form tooling according to claim 1, by a press lamination system including said vacuum form tooling according to claim 12, and by a vacuum lamination or forming method according to claim 15. Further aspects of the present invention are given in the dependent claims.

In particular, the object is achieved by a vacuum form tooling for a press lamination system or a vacuum lamination system. The vacuum form tooling can be adapted to be used in conventional press systems such as a hydraulic, mechanic and/or pneumatic press. In a particular example, the press lamination system may be electrically actuated, e.g. by means of a stepper motor, a servo drive, and/or the like. Further, the vacuum form tooling may be adapted to be used in vacuum lamination systems. Those systems may be driven systems or may be manually operated. Accordingly, the vacuum form tooling may be used for serial production, for small series or for prototyping. The vacuum form tooling comprises a lower mold that is adapted to support at least one substrate element to be laminated or to provide at least one molding tool to be molded. Further the lower mold is adapted to be negatively pressurized.

For supporting the at least one substrate element, the lower mold may include a corresponding nest (or multiple nests, depending on the number of substrate elements to be supported). The nest may have recessed and/or protruding portions to securely support and fix the substrate element for lamination. Further, in case of vacuum forming, the at least one molding tool may be fixed to a nest, as the substrate in a vacuum lamination line up, or the at least one molding tool may be integrally formed with the lower mold.

The substrate element may be any kind of work piece, for example a cladding part of a vehicle cabin, such as an instrument panel, a center console, a seat back panel and/or a door trim. Likewise, the shape of the molding tool is not limited and may be used for forming disposable parts, such as cups, containers, lids, trays, blisters, clamshells, and other products, or parts such as vehicle doors, dash panels, refrigerator liners, utility vehicle beds, plastic pallets and/or the like.

The film portion may be a thermoplastic film portion having a thickness from 0.1 to 12 mm, particularly from 0.2 to 10 mm, or from 0.6 to 4 mm. Further, the thermoplastic film may be provided on films or as sheets, which may be cut to desired shape prior to clamping. The film portion may include or may be made of any kind of thermoplastic material, including, but not limited to acrylonitrile butadiene styrene, ABS, high-impact polystyrene, HIPS, polypropylene, PP, polyethylene, PE, polyvinyl chloride, PVC, and thermoplastic olefin, TPO. Further, composite films can be used for vacuum lamination and vacuum forming.

For getting negatively pressurized, the lower mold may include a vacuum suction line, that can be connected to a respective vacuum system, providing a negative pressure/vacuum. The suction line may be in communication with a plurality of suction holes, distributed over the lower mold, so as to provide for a proper sucking of a film portion.

Further, the vacuum form tooling comprises an upper mold. The upper mold is adapted to be negatively pressurized. Accordingly, the upper mold may include a vacuum suction line, that can be connected to a respective vacuum system, providing a negative pressure/vacuum. The suction line may be in communication with a plurality of suction holes, distributed over the upper mold, so as to provide for a proper sucking of a film portion.

Further, the upper mold is arranged movable and can be moved towards the lower mold from an open position to a closed position. In the closed position, the at least one substrate element can be laminated with a respective film portion. For vacuum forming, in the closed position, the film portion can be laminated onto the at least one molding tool. The closed position is therefore also denoted as laminating or molding position.

Additionally, the vacuum form tooling comprises a clamping frame. The clamping frame is adapted to clamp a film portion that shall be laminated on the at least one substrate element supported by the lower mold or that shall be molded onto the at least one molding tool provided by the lower mold. The clamping frame is moveable from a first position to a second position.

In the first position, the clamping frame is positioned relative to the upper mold in a way that the clamped film portion can be sucked at least partially into the negatively pressurized upper mold, particularly in a cavity thereof. To achieve a proper sucking, the clamping frame may sealingly engage with the upper mold when being in its first position. Further, the sealing may be achieved by the film portion that sealingly covers an edge the upper mold. Due to the sealing, the clamped film portion can be effectively sucked at least partially into the negatively pressurized upper mold.

As the film portion is sucked at least partially into the negatively pressurized upper mold, undesired sagging of the film portion - particularly when being heated - can be effectively prevented. Hence, the timing when the film portion comes into contact with the substrate element and/or the lower mold can be controlled.

Further, sucking the film portion at least partially into the negatively pressurized upper mold allows pre-stretching the clamped film portion to that a more uniform film thickness can be achieved on the film laminated support element. This results in an improved surface quality. Still further, a cavity of the upper mold may be shaped and/or pressurized so as to achieve a desired degree of pre-stretching.

In the second position, the clamping frame is positioned relative to the lower mold in a way that the clamped film portion can be sucked for lamination on the at least one substrate element supported by the negatively pressurized lower mold, or for molding onto the at least one molding tool. To achieve a proper sucking of the film portion on the at least one substrate element/molding tool, the clamping frame may sealingly engage with the lower mold when being in its second position. Further, the sealing may be achieved by the film portion that sealingly covers an edge the lower mold. To support the sucking of the clamped film portion on the at least one substrate element/molding tool, the upper mold may be positively pressurized, when being in closed position. Hence, the film portion can be additionally pressed on the at least one substrate element/molding tool.

While the clamping frame is moved from the first to the second position, the upper mold preferably remains negatively pressurized. The negative pressure applied to the upper mold may remain constant or may be varied, so that the film portion can be further sucked into the negatively pressurized upper mold, while the clamping frame moves to the second position.

Particularly, the movement of the clamping frame and the upper mold may be controlled so that the second position and the closed position are reached simultaneously or at least substantially simultaneously. Further, the movement of the clamping frame and the upper mold may be controlled so that the second position is reached prior to the closed position, or vice versa.

As the clamping frame and the upper mold are arranged movable, the form tooling can be installed in a conventional press, such as a servo-press, having a stationary base body. Particularly, the lower mold may be a stationary mold. Hence, the vacuum form tooling and a respective press lamination system or vacuum lamination system can be used in almost any production site. Specific floor structures, such as pits, are usually not required.

Further it has to be noted, that the terms "upper mold" and "lower mold" are not to be understood to define an orientation of the tooling, particularly not a vertical one. However, a vertical orientation of the form tooling may be intended, so that the upper mold is arranged vertically above the lower mold and is moved substantially vertically, when being moved from the open to the closed position. However, any other orientation is possible. For example, a horizontal orientation of the form tooling may be intended, so that the upper mold is arranged nearby the lower mold and is moved substantially horizontally, when being moved from the open to the closed position.

Further, the clamping frame may be configured to be moveable to a third position, wherein the third position is a position arranged outside an interspace formed by the upper mold and the lower mold. This third position can be a position that allows clamping a film portion to the clamping frame, heating a clamped film portion, applying an adhesive on the clamped film portion, and/or the like. It has to be noted, that the clamping frame may be configured to be moveable to at least a forth position, wherein the forth position is a position arranged outside the interspace formed by the upper mold and the lower mold. Hence, the clamping frame can be moved to different stations for treating the clamed film portion (e.g. heating, applying adhesive, ...) and/or the clamping frame (e.g. clamping a film portion, removing excess film portions, cleaning, maintenance, ...).

Further, the vacuum form tooling may comprise multiple (at least two) clamping frames, which may be moved to the first and second positions and optionally to the third/fourth positions. Thus, for example a first clamping frame may be positioned between the upper and lower mold, so as to laminate/mold a clamped film portion on a respective substrate element/molding tool and a second clamping frame get prepared for a subsequent lamination/molding, e.g. a film portion can be clamped to this second clamping frame.

The vacuum form tooling may further include a heating device. Any suitable heating device, particularly a radiation heating device, such as an IR heating device, may be used. The heating device is adapted to heat the clamped film portion. The heating softens the film and therefore improves the flowability and stretchability of the film portion. The heating device may be controlled so as to heat the film portion to a desired temperature, or may be time-controlled. Further, the heating device may be arranged moveable or may be a stationary heating device.

In case of a movable heating device, the heating device may be moved relative to the clamping frame so as to heat the film portion, when the clamping frame is e.g. in its first or third position. In case of a stationary heating device, the clamping frame may be moved relative to the heating device.

Further, the heating device may be a one-sided heating device, heating the film portion only from one side, or a two sided heating device, sandwiching the film portion to provide heat from two sides.

The clamping frame may be moved from the first to the second position by the upper mold, when the upper mold moves from the open position to the closed position. According to this aspect, the clamping frame may be guided only, i.e. may have no distinct drive. Thus, the movement of the upper mold is transferred to the clamping frame and the clamping frame is moved due to an engagement between the clamping frame and the moving upper mold.

In another aspect, there may be a clamping frame drive, being assigned to the clamping frame. This clamping frame drive is adapted to move the clamping frame from the first to the second and/or third position. Thus, the clamping frame can be moved independently from a movement of the upper mold.

The vacuum form tooling may further include a control unit. This control unit may include software and/or hardware components and may be a stand-alone control unit or may be integrated in a higher-level control unit, such as a control unit of a laminating press or a vacuum lamination system, or the like.

The control unit may be adapted to control the vacuum form tooling to perform the following steps.
- move the upper mold to the open position;
- apply a negative pressure to the upper mold in order to suck a film portion clamped by the clamping frame at least partially into the negatively pressurized upper mold;
- move the upper mold to the closed position and the clamping frame to the second position, and
- apply a negative pressure to the lower mold in order to suck a film portion clamped by the clamping frame for lamination on the at least one substrate element supported by the negatively pressurized lower mold, or on the at least one molding tool of the lower mold.

Further, the control unit may be adapted to control the vacuum form tooling to perform the method described in greater detail further below.

The clamping frame may be a three-dimensional clamping frame. Accordingly, when being clamped, the film portion is not arranged in a two-dimensional plane but three dimensionally. Hence, by a three-dimensional clamping frame, the film portion can be pre-formed in accordance with the shape of the substrate element to be laminated or the molding tool to be molded. This increases the surface quality and a more uniform film thickness of the film laminated substrate element/the molded element can be achieved.

Alternatively, or additionally, the clamping frame may include multiple clamping frame elements. At least one clamping frame element may be moveable relative to another clamping frame element. Particularly, the clamping frame element may be translationally moveable and/or rotationally moveable.

The movement of the at least one clamping frame element may be controlled in such a manner, that sagging of the clamped film portion is prevented. Further, by providing moveable clamping frame element(s), the shape of the clamped film portion can be adapted so as to match a shape of the substrate element to be laminated/the molding tool to be molded.

For example, for heating and/or for applying an adhesive, the clamped film portion may be arranged substantially flat in order to provide a uniform heating/adhesive distribution. However, prior to lamination/molding, the clamping frame is readjusted by moving clamping frame element(s) relative to each other and the shape of the clamped film portion can be adapted so as to match a shape of the substrate element/the molding tool. Further, by moving a clamping frame element, stretching of the film portion can be controlled and/or further film can be supplied to the upper/lower mold in order to achieve a more uniform film thickness. Hence surface quality of the work piece can be improved.

The translational movement may be an inward- or outward directed movement and may lead to a tensioning or loosening of the clamped film portion. Likewise, the rotational movement may lead to a tensioning or loosening of the clamped film portion. The rotational movement may be around a longitudinal axis of the respective clamping frame element, and/or around any other axis.

It has to be understood that some of the clamping frame elements may be moved inwardly and others outwardly to control the shape and stretching of the clamped film portion.

The vacuum form tooling may further comprise a cutting device, such as a punching device, for cutting excess film portions after lamination/molding. Further, the cutting device may be arranged moveable or may be a stationary cutting device. In case of a movable cutting device, the cutting device may be moved relative to the film laminated substrate element/molded part so as to cut excess film portions. In case of a stationary cutting device, the film laminated substrate element/molded part may be moved relative to the cutting device.

Further, the clamping frame may be adapted to clamp a film portion, being an exactly cut film portion in a way that no excess film portions are present after lamination/molding. Accordingly, there is no need for a subsequent cutting. The exact cut film portion may be clamped and controlled by a clamping frame, as described above, i.e. a three dimensional clamping frame and/or a clamping frame having at least one movable clamping frame element.

The vacuum form tooling may further comprise an adhesive apply device for applying adhesive on the at least one substrate element and/or the film portion. The applied adhesive may be a reactive adhesive and/or a hotmelt adhesive, and may be applied e.g. by spraying. Accordingly, the adhesive supply device may include at least one nozzle for spraying adhesive on the at least one substrate element and/or the film portion.

The adhesive apply device may be moveable or may be stationary. In case of a stationary adhesive apply device, the film portion and/or the substrate element must be brought to the adhesive apply device. In case of a movable adhesive apply device, the adhesive can be brought to the film portion and/or the substrate element.

The clamping frame of the vacuum form tooling may further comprise a coupling to be coupled to a guide and/or a drive. Accordingly, when in use, the clamping frame can be moved from the first to the second and/or third position.

Further, the clamping frame may be a three-dimensional clamping frame and/or may include multiple clamping frame elements, wherein at least one clamping frame element may be movable relative to another clamping frame element. The movement may be a translational and/or rotational movement, as already outlined above. Accordingly, the advantages set out forth above, can be achieved with this clamping frame.

The object is further achieved by a press lamination system for vacuum lamination or for vacuum forming. The press lamination system includes at least one vacuum form tooling as described above, and at least one base body for receiving the lower mold and at least one drive for moving the upper mold towards the lower mold from an open position to a closed position. The drive may be a pneumatic drive, a hydraulic drive and/or a mechanic drive. In a particular aspect, the press lamination system may include an electrically actuated press. The electrically actuated press may be electrically actuated, e.g. by means of a stepper motor, a servo drive, and/or the like. Optionally, the press lamination system includes at least one guide, such as a guide rail, for guiding the movement of the clamping frame from the first to the second position.

The press lamination system may further include a conveyor device for automated feeding of substrate elements (to the lower mold) and/or film portions (to the clamping frame), and/or for automated removal of film laminated substrate elements or molded parts. The conveyor device may comprise a conveyor table, e.g. including a conveyor belt and/or a conveying manipulator, such as an industrial robot.

Further, the press lamination system may include a vacuum system for negatively pressurizing the lower mold and/or the upper mold. Particularly, the upper mold and the lower mold may include respective suction lines for being connected to a vacuum system.

The object is further achieved by a vacuum lamination or vacuum forming method using a press lamination system as described above. The method comprising the following steps, wherein the following order may be varied:
- moving an upper mold to its open position;
- clamping a film portion in a clamping frame;
- optionally, applying adhesive on the film portion and/or the at least one substrate element;
- optionally, heating the film portion, using a heating device;
- arranging at least one substrate element or a molding tool on the lower mold;
- moving the clamping frame to the first position;
- applying a negative pressure to the upper mold in order to suck the film portion clamped by the clamping frame at least partially into the negatively pressurized upper mold;
- moving the upper mold to the closed position;
- moving the clamping frame to the second position;
- applying a negative pressure to the lower mold in order to suck the film portion clamped by the clamping frame for lamination on the at least one substrate element supported by the negatively pressurized lower mold, or for molding onto the at least one molding tool of the negatively pressurized lower mold;
- laminating the clamped film portion on the at least one substrate element, or molding the clamped film portion onto the at least one molding tool;
- moving the upper mold out of the closed position;
- optionally, cutting excess film portions using a cutting device from the film laminated substrate element, or the molded film part, and
- optionally, removing the film laminated substrate element, or the molded film part from the lower mold.

### Brief description of the figures

The present disclosure will be more readily appreciated by reference to the following detailed description when being considered in connection with the accompanying drawings in which:
- Fig. 1A: schematically shows a press lamination system including said vacuum form tooling;
- Fig. 1B: schematically shows the press lamination system of Fig. 1A, wherein adhesive is applied;
- Fig. 1C: schematically shows the press lamination system of Fig. 1A, wherein a clamping frame is moved into the system;
- Fig. 1D: schematically shows the press lamination system of Fig. 1A, wherein a film held by the clamping frame is heated;
- Fig. 1E: schematically shows the press lamination system of Fig. 1A, wherein an upper tool is set under vacuum;
- Fig. 1F: schematically shows the press lamination system of Fig. 1A, wherein the upper tool has been lowered to the closed position;
- Fig. 1G: schematically shows the press lamination system of Fig. 1A, wherein the upper tool has been re-opened;
- Fig. 1H: schematically shows the press lamination system of Fig. 1A, wherein a cutting device has been inserted;
- Fig. 1I: schematically shows the press lamination system of Fig. 1A, wherein the vacuum laminated work piece is removed;
- Fig. 2A: gives a schematic cut view of a three dimensional clamping frame;
- Fig. 2B: gives a schematic cut view of the three dimensional clamping frame of Fig. 2A, wherein a clamping frame element is moved;
- Fig. 2C: gives a schematic cut view of the three dimensional clamping frame of Fig. 2A, wherein a clamping frame element is rotated;
- Fig. 3A: gives a schematic top view of a clamping frame, and
- Fig. 3B: gives a schematic top view of the clamping frame of Fig. 3A, wherein the clamping frame elements are moved.

### Detailed description of the figures

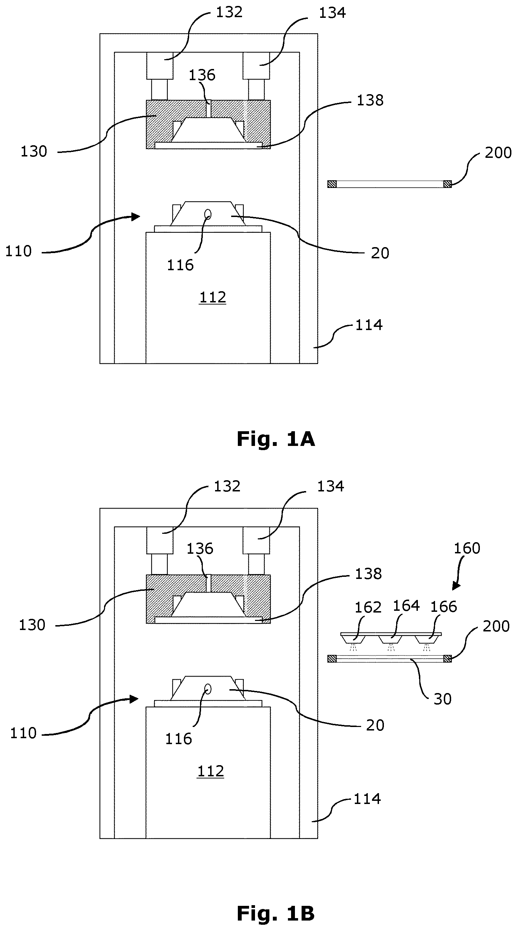

Figs. 1A to 1I show a press lamination system 1 including a vacuum form tooling 10, while performing different method steps of a vacuum lamination method. It is to be understood, that these method steps can be performed, mutatis mutandis for vacuum forming. For vacuum forming generally no adhesive has to be applied and the substrate element 20 needs to be replaced by a respective molding tool.

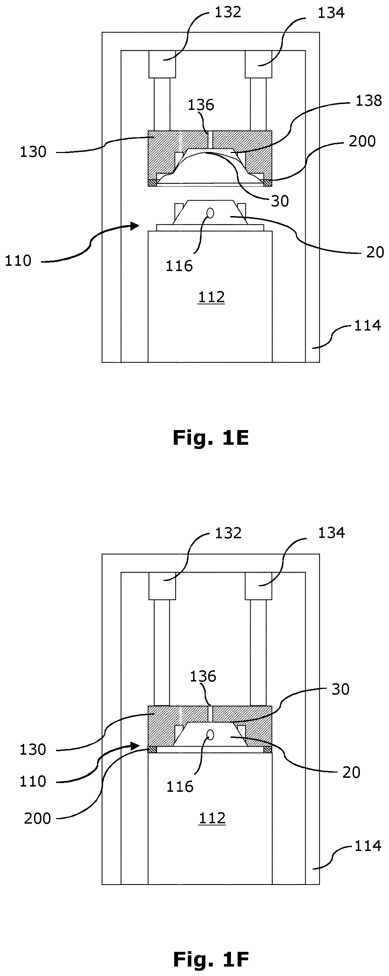

Particularly, Fig. 1A shows a press lamination system 1 including a vacuum form tooling 10. The press lamination system 1 includes a stationary base body 112 that receives and supports a lower mold 110 of the vacuum form tooling 10. Further, the press lamination system 1 includes at least one drive 132, 134 for moving an upper mold 130 of the vacuum form tooling 10 towards the lower mold 110 from an open position (cf. Fig. 1A) to a closed position (cf. Fig. 1F). The drives may be arranged on a portal 114, spanning the stationary base body 112,

The press lamination system 1 further comprises a vacuum system (not shown for negatively pressurizing the lower mold 110 and upper mold 130.

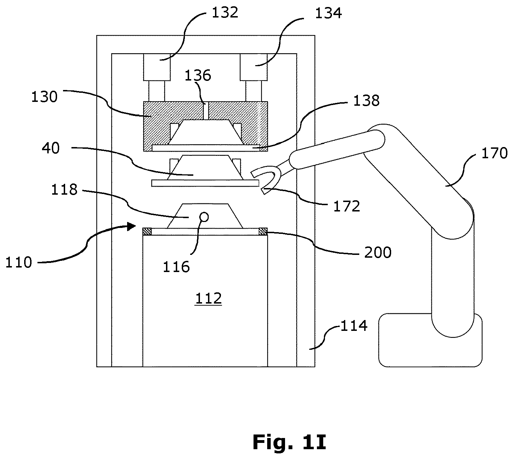

The vacuum form tooling 10 comprises a lower mold 110 being a stationary mold in the embodiment depicted in Fig. 1A. It is to be understood, that the lower mold could be arranged movable as well. The lower mold 110 supports a substrate element 20 to be laminated. In particular, the substrate element 20 is held by a nest 118 shown in Fig. 1I. Said lower mold is adapted to be negatively pressurized by means of the vacuum system, which can be in communication with suction line 116. The substrate element is air permeable (at least to a certain degree), so that the vacuum applied to the lower mold can reach the film portion 30 (cf. Fig. 1F).

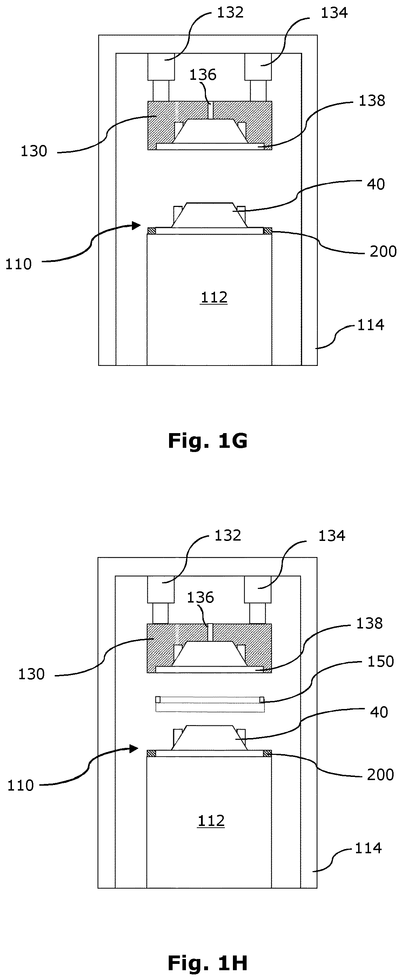

The vacuum form tooling 10 comprises also an upper mold 130, being adapted to be negatively pressurized by said vacuum system. The vacuum system may be in communication with suction line 136 provided in a cavity 138 of the upper mold 130. As shown in Figs. 1A, 1F and 1G, the upper mold 130 can be moved towards the lower mold 110 from an open position to a closed position, and vice versa.

Further, the vacuum form tooling 10 comprises at least one clamping frame 200. The clamping frame 200 is adapted to clamp a film portion 30 to be laminated on the at least one substrate element 20. As shown in Fig. 1A, the clamping frame 200 is arranged in a third position, i.e. a position outside an interspace formed by the upper mold 130 and the lower mold 110. In this position, the clamping frame 200 is easily accessible and a film portion can be clamped (cf. Fig. 1B).

As shown in Fig. 1B, the vacuum form tooling 10 optionally includes an adhesive apply device 160 for applying adhesive on the at least one substrate element 20 and/or the film portion 30. The adhesive may be applied by spraying. Accordingly, the adhesive supply device 160 may include at least one nozzle 162, 164, 166 for spraying adhesive on the at least one substrate element 20 and/or the film portion 30. In Fig. 1B, the adhesive is sprayed on the clamped film portion, while the clamping frame being in its third position.

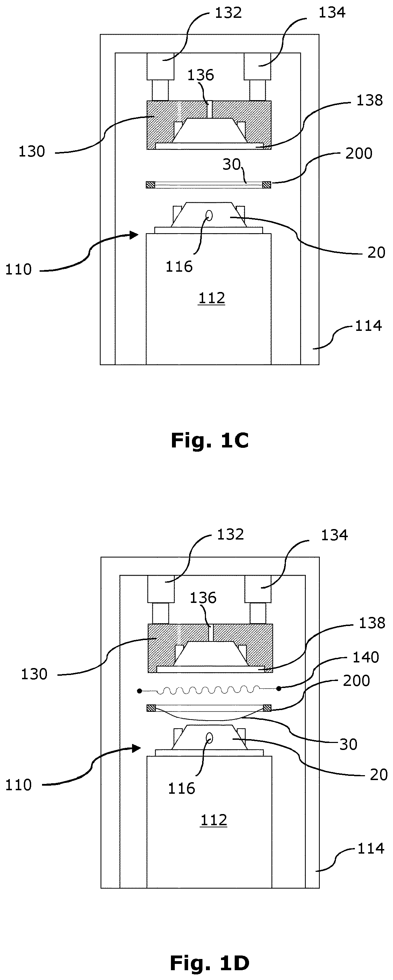

In Fig. 1C, the clamping frame 200 has been moved in an interspace defined by the upper mold 130 and the lower mold 110. The position shown corresponds to the first position of the clamping frame.

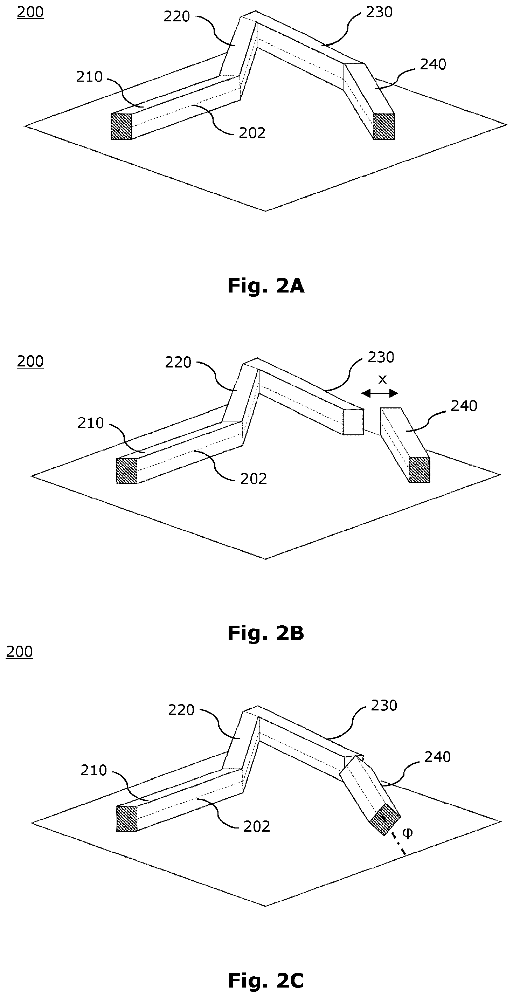

As further shown in Fig. 1D, a heating device 140 may be provided for heating the clamped film portion 30. This leads to a softening and a certain sagging of the film portion. The sagging can be prevented by providing a clamping frame having movable frame elements, as e.g. depicted in Figs. 2A to 3B. Here, the heating device 140 is a movable heating device, that can be inserted in the interspace defined by the upper mold 130 and the lower mold 110 in order to heat the clamped foil portion from above.

In Fig. 1E, the upper mold 130 is lowered so as to sealingly engage with the clamping frame 200. Subsequently, the upper mold 130 can be negatively pressurized, i.e. a vacuum can be applied to suction line 136 and the cavity 138 is evacuated. As a result, the clamped film portion 30 is at least partially sucked into the negatively pressurized upper mold 130.

As shown in Fig. 1F, the upper mold 130 is further lowered to the closed position and the clamping frame 200 is moved to its second position. In this position, the clamping frame 200 (or the upper mold 130) seals with the lower mold 110. Thus, the clamped film portion 30 can be sucked for lamination on the at least one substrate element 20 supported by the negatively pressurized lower mold 110. This can be supported by positively pressurizing the upper mold. Thereby, the clamped film portion 30 is laminated on the substrate element 20.

After lamination, the upper mold 130 can be moved out of the closed position, i.e. opened again. The film laminated substrate element 40 is still provided on the lower mold 110.

In an optional step, depicted in Fig. 1H, a cutting device 150 (e.g. a punching device) can be provided to cut excess film portions from the film laminated substrate element 40. In case exact cut film portions are used for clamping, this step may be superfluous.

As shown in Fig. 1I the press lamination system 1 may include a conveyor device 170, such as an industrial robot having a gripper 172, or a conveyor table for automated feeding of substrate elements 20 to the lower mold and/or film portions 30 to respective clamping frames 200. Further, the conveyor device 170 may serve for automated removal of film laminated substrate elements 40, as shown in Fig. 1I.

Fig. 2A gives a schematic cut view of a three dimensional clamping frame 200. The film portion (not shown) is clamed along the clamping area 202 illustrated by a dashed line. As seen, the clamped film portion is not arranged in a two-dimensional plane but three dimensionally.

Further, the three dimensional clamping frame 200 includes multiple clamping frame elements 210, 220, 230, 240, that built up the clamping frame 200.

As best seen in Figs. 2B and 2C, at least one clamping frame element, here clamping frame element 240 may be moveable relative to another clamping frame element, here clamping frame elements 210, 220 and 230. Particularly, the clamping frame element may be translationally moveable and/or rotationally moveable.

As illustrated in Fig. 2B, the translational movement x of clamping frame element 240 may be an outward directed movement and may lead to a tensioning of the clamped film portion. Likewise, the translational movement may be inwardly directed and my lead to a loosening of the clamped film portion.

Further, as illustrated in Fig. 2C, the moveable clamping frame element 240 may be rotated. Here, an outward rotation around a longitudinal axis φ is shown. This rotational movement will also lead to a tensioning of the clamped film portion. Likewise, the rotational movement may be inwardly directed and my lead to a loosening of the clamped film portion. Further, the axis of rotation may be chosen differently. For example, the clamping frame elements 210, 220, 230, 240 may be hinged and may allow for a deformation of the clamping frame, defined by the respective hinges.

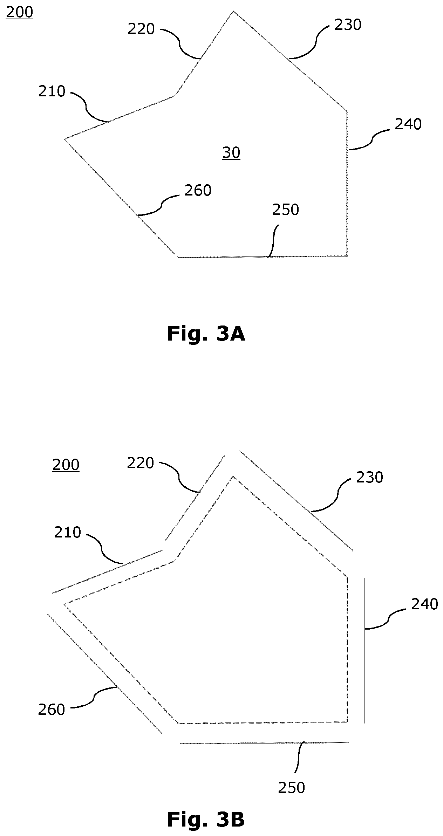

Figs. 3A and 3B give a schematic top view of a clamping frame 200. In Fig. 2A, the clamping frame elements 210, 220, 230, 240, 250, 260 are in their initial position and the clamped foil portion 30 is not (yet) pre-stretched. In Fig. 3B, the clamping frame elements 210, 220, 230, 240, 250, 260 have been moved outwardly, thereby tensioning and pre-stretching the clamped foil portion 30. In Fig. 3B, the initial position of the clamping frame elements 210, 220, 230, 240, 250, 260 is given in dashed lines.

With the clamping frames depicted in Figs. 2A to 3B, the movement of the at least one clamping frame element may be controlled in such a manner, that sagging of the clamped film portion 30 is prevented. Further, by providing moveable clamping frame element(s), the shape of the clamped film portion can be adapted so as to match a shape of the substrate element to be laminated.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

### List of reference signs

- 1: press lamination system
- 10: vacuum form tooling
- 20: substrate element
- 30: film portion
- 40: film laminated substrate element
- 110: lower mold
- 112: base body
- 114: portal
- 116: suction line
- 118: nest
- 130: upper mold
- 132: drive
- 134: drive
- 136: suction line
- 138: cavity of upper mold
- 140: heating device
- 150: cutting device
- 160: adhesive apply device
- 162: nozzle
- 164: nozzle
- 166: nozzle
- 170: conveyor device
- 172: gripper
- 200: clamping frame
- 202: clamping area
- 210: clamping frame element
- 220: clamping frame element
- 230: clamping frame element
- 240: clamping frame element
- 260: clamping frame element
- 250: clamping frame element
- φ: rotation
- X: translation

## Claims

1. A vacuum form tooling (10) particularly for a press lamination system (1) or for a vacuum lamination system, the
vacuum form tooling (10) comprising:
a lower mold (110), being adapted to be negatively pressurized, wherein the lower mold is adapted to support at least one substrate element (20) to be laminated or to provide at least one molding tool to be molded and;
an upper mold (130), being adapted to be negatively pressurized, wherein the upper mold (130) can be moved towards the lower mold (110) from an open position to a closed position, wherein in the closed position, the at least one substrate element (20) can be laminated, or the at least one molding tool can be molded; and
a clamping frame (200), the clamping frame (200) being adapted to clamp a film portion (30) to be laminated on the at least one substrate element (20) or to be molded onto the at least one molding tool, the clamping frame (200) being moveable from a first position to a second position, wherein
in the first position, the clamping frame (200) is positioned relative to the upper mold (130) in a way that the clamped film portion (30) can be sucked at least partially into the negatively pressurized upper mold, and wherein
in the second position, the clamping frame (200) is positioned relative to the lower mold (130) in a way that the clamped film portion (30) can be sucked for lamination or molding on the at least one substrate element (20), or molding tool, respectively of the negatively pressurized lower mold (110).

2. The vacuum form tooling (10) according to claim 1, wherein the lower mold (110) is a stationary mold.

3. The vacuum form tooling (10) according to any preceding claim, wherein the clamping frame (200), is configured to be moveable to a third position, wherein the third position is a position arranged outside an interspace formed by the upper mold (130) and the lower mold (110).

4. The vacuum form tooling (10) according to any preceding claim, further including a heating device (140), particularly an IR heating device, the heating device being adapted to heat the clamped film portion (30).

5. The vacuum form tooling (10) according to any preceding claim, wherein the clamping frame (200) is moved from the first to the second position by the upper mold (130), when the upper mold moves from the open position to the closed position.

6. The vacuum form tooling (10) according to any preceding claim, further including a clamping frame drive, being assigned to the clamping frame (200), wherein the clamping frame drive is adapted to move the clamping frame from the first to the second and/or third position.

7. The vacuum form tooling (10) according to any preceding claim, further comprising a control unit, wherein the control unit is adapted to control the tooling to perform the following steps:
move the upper mold (130) to the open position;
apply a negative pressure to the upper mold (130) in order to suck a film portion (30) clamped by the clamping frame (200) at least partially into the negatively pressurized upper mold (130);
move the upper mold (130) to the closed position and the clamping frame to the second position;
apply a negative pressure to the lower mold (110) in order to suck a film portion (30) clamped by the clamping frame (200) for lamination or molding on the at least one substrate element (20), or molding tool, respectively of the negatively pressurized lower mold (110).

8. The vacuum form tooling (10) according to any preceding claim, wherein
the clamping frame (200) is a three-dimensional clamping frame, and/or wherein
the clamping frame (200) includes multiple clamping frame elements (210, 220, 230, 240, 260), wherein at least one clamping frame element (240) is movable relative to another clamping frame element (210, 220, 230, 260), wherein the movement may be a translational and/or rotational movement.

9. The vacuum form tooling (10) according to any preceding claim, wherein
the vacuum form tooling (10) further comprises a cutting device (150), such as a punching device, for cutting excess film portions after lamination, or wherein the clamping frame (200) is adapted to clamp a film portion (30), being an exactly cut film portion (30) in a way that no excess film portions are present after lamination.

10. The vacuum form tooling (10) according to any preceding claim, further comprising
an adhesive apply device (160), for applying adhesive on the at least one substrate element (20) and/or the film portion (30), wherein
the adhesive supply device (160) may include at least one nozzle (162, 164, 166) for spraying adhesive on the at least one substrate element (20) and/or the film portion (30).

11. The vacuum form tooling (10) according to any preceding claim, wherein the clamping frame further comprises
a coupling to be coupled to a guide and/or a drive.

12. A press lamination system (1) for vacuum lamination or for vacuum forming, the press lamination system (1) including
at least one vacuum form tooling (10) according to any one of claims 1 to 10;
at least one base body (112) for receiving the lower mold (110);
at least one drive (132, 134) for moving the upper mold (130) towards the lower mold (110) from an open position to a closed position; and optionally
at least one guide for guiding the movement of the clamping frame (200) from the first to the second position.

13. The press lamination system (1) according to claim 12, further comprising a conveyor device (170)
for automated feeding of substrate elements (20) and/or film portions (30), and/or
for automated removal of film laminated substrate elements (40).

14. The press lamination system (1) according to claim 12 or 13, the system further comprising a vacuum system for negatively pressurizing the lower mold (110) and the upper mold (130).

15. A vacuum lamination or forming method using a press lamination system (1) according to any one of claims 12 to 14, the method comprising the following steps:
moving an upper mold (130) to its open position;
clamping a film portion (30) in a clamping frame (200);
optionally, applying adhesive on the film portion (30) and/or the at least one substrate element (20);
optionally, heating the film portion, using a heating device (140);
arranging at least one substrate element (20) or a molding tool on the lower mold;
moving the clamping frame (200) to the first position;
applying a negative pressure to the upper mold (130) in order to suck the film portion (30) clamped by the clamping frame (200) at least partially into the negatively pressurized upper mold (130);
moving the upper mold (130) to the closed position;
moving the clamping frame (200) to the second position;
applying a negative pressure to the lower mold (110) in order to suck the film portion (30) clamped by the clamping frame (200) for lamination on the at least one substrate element (20) supported by the negatively pressurized lower mold (110), or for molding onto the at least one molding tool of the negatively pressurized lower mold (110);
laminating the clamped film portion on the at least one substrate element, or molding the clamped film portion onto the at least one molding tool;
moving the upper mold (130) out of the closed position;
optionally, cutting excess film portions using a cutting device (150) from the film laminated substrate element (40), or the molded film part;
optionally, removing the film laminated substrate element (40) or the molded film part from the lower mold (110).

## Patentansprüche

1. Vakuumformwerkzeug (10), insbesondere für ein Presslaminierungssystem (1) oder für ein Vakuumlaminierungssystem, wobei das Vakuumformwerkzeug (10) Folgendes umfasst:
eine untere Form (110), die für eine Unterdruckbeaufschlagung ausgelegt ist, wobei die untere Form dafür ausgelegt ist, mindestens ein zu laminierendes Substratelement (20) zu tragen oder mindestens ein zu formendes Formwerkzeug bereitzustellen, und
eine obere Form (130), die für eine Unterdruckbeaufschlagung ausgelegt ist, wobei die obere Form (130) in Richtung der unteren Form (110) aus einer offenen in eine geschlossene Position bewegt werden kann, wobei in der geschlossenen Position das mindestens eine Substratelement (20) laminiert oder das mindestens eine Formwerkzeug geformt werden kann; und
ein Klemmrahmen (200), wobei der Klemmrahmen (200) dazu ausgelegt ist, einen Filmabschnitt (30), der auf das mindestens eine Substratelement (20) laminiert oder auf das mindestens eine Formwerkzeug geformt werden soll, festzuklemmen, wobei der Klemmrahmen (200) von einer ersten Position in eine zweite Position bewegbar ist, wobei
in der ersten Position der Klemmrahmen (200) relativ zur oberen Form (130) so positioniert ist, dass der festgeklemmte Filmabschnitt (30) zumindest teilweise in die unter Unterdruck stehende obere Form gesaugt werden kann, und wobei
in der zweiten Position der Klemmrahmen (200) relativ zur unteren Form (130) so positioniert ist, dass der festgeklemmte Filmabschnitt (30) zum Laminieren oder Formen auf das mindestens eine Substratelement (20) bzw. das Formwerkzeug der unter Unterdruck stehenden unteren Form (110) gesaugt werden kann.

2. Vakuumformwerkzeug (10) nach Anspruch 1, wobei die untere Form (110) eine stationäre Form ist.

3. Vakuumformwerkzeug (10) nach einem der vorstehenden Ansprüche, wobei der Klemmrahmen (200) so konfiguriert ist, dass er in eine dritte Position bewegt werden kann, wobei die dritte Position eine Position ist, die außerhalb eines Zwischenraums angeordnet ist, der durch die obere Form (130) und die untere Form (110) gebildet wird.

4. Vakuumformwerkzeug (10) nach einem der vorstehenden Ansprüche, ferner umfassend eine Heizvorrichtung (140), insbesondere eine IR-Heizvorrichtung, wobei die Heizvorrichtung dazu ausgelegt ist, den festgeklemmten Filmabschnitt (30) zu erwärmen.

5. Vakuumformwerkzeug (10) nach einem der vorstehenden Ansprüche, wobei der Klemmrahmen (200) durch die obere Form (130) von der ersten in die zweite Position bewegt wird, wenn sich die obere Form von der offenen Position in die geschlossene Position bewegt.

6. Vakuumformwerkzeug (10) nach einem der vorstehenden Ansprüche, ferner umfassend einen dem Klemmrahmen (200) zugeordneten Klemmrahmenantrieb, wobei der Klemmrahmenantrieb dazu ausgelegt ist, den Klemmrahmen von der ersten in die zweite und/oder dritte Position zu bewegen.

7. Vakuumformwerkzeug (10) nach einem der vorstehenden Ansprüche, ferner umfassend eine Steuereinheit, wobei die Steuereinheit dazu ausgelegt ist, das Werkzeug so zu steuern, dass es die folgenden Schritte ausführt:
Bewegen der oberen Form (130) in die geöffnete Position;
Beaufschlagen eines Unterdrucks auf die obere Form (130), um einen vom Klemmrahmen (200) festgeklemmten Filmabschnitt (30) zumindest teilweise in die unter Unterdruck stehende obere Form (130) zu saugen;
Bewegen der oberen Form (130) in die geschlossene Position und des Klemmrahmens in die zweite Position;
Beaufschlagen eines Unterdrucks auf die untere Form (110), um einen vom Klemmrahmen (200) festgeklemmten Filmabschnitt (30) zum Laminieren oder Formen auf das mindestens eine Substratelement (20) bzw. das Formwerkzeug der unter Unterdruck stehenden unteren Form (110) zu saugen.

8. Vakuumformwerkzeug (10) nach einem der vorstehenden Ansprüche, wobei
der Klemmrahmen (200) ein dreidimensionaler Klemmrahmen ist, und/oder wobei
der Klemmrahmen (200) mehrere Klemmrahmenelemente (210, 220, 230, 240, 260) umfasst, wobei mindestens ein Klemmrahmenelement (240) relativ zu einem anderen Klemmrahmenelement (210, 220, 230, 260) bewegbar ist, wobei die Bewegung eine Translations- und/oder Rotationsbewegung sein kann.

9. Vakuumformwerkzeug (10) nach einem der vorstehenden Ansprüche, wobei
das Vakuumformwerkzeug (10) ferner eine Schneidvorrichtung (150), beispielsweise eine Stanzvorrichtung, zum Schneiden überschüssiger Filmabschnitte nach dem Laminieren umfasst, oder
wobei der Klemmrahmen (200) so ausgelegt ist, dass er einen Filmabschnitt (30), der ein exakt geschnittener Filmabschnitt (30) ist, so festklemmt, dass nach dem Laminieren keine überschüssigen Filmabschnitte vorhanden sind.

10. Vakuumformwerkzeug (10) nach einem der vorstehenden Ansprüche, ferner umfassend
eine Klebstoffauftragsvorrichtung (160) zum Auftragen von Klebstoff auf das mindestens eine Substratelement (20) und/oder den Filmabschnitt (30), wobei
die Klebstoffauftragsvorrichtung (160) mindestens eine Düse (162, 164, 166) zum Aufsprühen von Klebstoff auf das mindestens eine Substratelement (20) und/oder den Filmabschnitt (30) umfassen kann.

11. Vakuumformwerkzeug (10) nach einem der vorstehenden Ansprüche, wobei der Klemmrahmen ferner Folgendes umfasst
eine Kupplung, die mit einer Führung und/oder einem Antrieb gekoppelt werden kann.

12. Presslaminierungssystem (1) zum Vakuumlaminieren oder zum Vakuumformen, wobei das Presslaminierungssystem (1) Folgendes umfasst:
mindestens ein Vakuumformwerkzeug (10) nach einem der Ansprüche 1 bis 10;
mindestens einen Basiskörper (112) zur Aufnahme der unteren Form (110);
mindestens einen Antrieb (132, 134) zum Bewegen der oberen Form (130) in Richtung der unteren Form (110) aus einer offenen Position in eine geschlossene Position; und optional
mindestens eine Führung zum Führen der Bewegung des Klemmrahmens (200) von der ersten zur zweiten Position.

13. Presslaminierungssystem (1) nach Anspruch 12, ferner umfassend eine Fördervorrichtung (170)
zum automatisierten Zuführen von Substratelementen (20) und/oder Filmabschnitten (30), und/oder
zum automatisierten Entfernen von filmlaminierten Substratelementen (40).

14. Presslaminierungssystem (1) nach Anspruch 12 oder 13, wobei das System ferner ein Vakuumsystem für eine Unterdruckbeaufschlagung auf die untere Form (110) und die obere Form (130) umfasst.

15. Vakuumlaminierungs- oder Formungsverfahren unter Verwendung eines Presslaminierungssystems (1) nach einem der Ansprüche 12 bis 14, wobei das Verfahren die folgenden Schritte umfasst:
Bewegen einer oberen Form (130) in ihre geöffnete Position;
Festklemmen eines Filmabschnitts (30) in einem Klemmrahmen (200);
optional, Auftragen von Klebstoff auf den Filmabschnitt (30) und/oder das mindestens eine Substratelement (20);
optional, Erwärmen des Filmabschnitts unter Verwendung einer Heizvorrichtung (140);
Anordnen mindestens eines Substratelements (20) oder eines Formwerkzeugs auf der unteren Form;
Bewegen des Klemmrahmens (200) in die erste Position;
Beaufschlagen eines Unterdrucks auf die obere Form (130), um den vom Klemmrahmen (200) festgeklemmten Filmabschnitt (30) zumindest teilweise in die unter Unterdruck stehende obere Form (130) zu saugen;
Bewegen der oberen Form (130) in die geschlossene Position;
Bewegen des Klemmrahmens (200) in die zweite Position;
Beaufschlagen eines Unterdrucks auf die untere Form (110), um den vom Klemmrahmen (200) festgeklemmten Filmabschnitt (30) zum Laminieren auf das mindestens eine Substratelement (20), das von der unter Unterdruck stehenden unteren Form (110) getragen wird, oder zum Formen auf das mindestens eine Formwerkzeug der unter Unterdruck stehenden unteren Form (110) zu saugen;
Laminieren des festgeklemmten Filmabschnitts auf das mindestens eine Substratelement oder Formen des festgeklemmten Filmabschnitts auf das mindestens eine Formwerkzeug;
Bewegen der oberen Form (130) aus der geschlossenen Position heraus;
optional, Schneiden überschüssiger Filmabschnitte unter Verwendung einer Schneidevorrichtung (150) von dem filmlaminierten Substratelement (40) oder dem geformten Filmteils;
optional, Entfernen des filmlaminierten Substratelements (40) oder des geformten Filmteils aus der unteren Form (110).

## Revendications

1. Outillage de formage sous vide (10) destiné notamment à un système de plastification par compression (1) ou à un système de plastification sous vide, l'outillage de formage sous vide (10) comprenant :
un moule inférieur (110) adapté à être mis sous pression négative, le moule inférieur étant adapté à supporter au moins un élément de substrat (20) à plastifier ou adapté à fournir au moins un outil de moulage servant à un moulage, et
un moule supérieur (130) adapté à être mis sous pression négative, le moule supérieur (130) pouvant être déplacé vers le moule inférieur (110), d'une position ouverte vers une position fermée et, en position fermée, l'au moins un élément de substrat (20) pouvant être plastifié, ou l'au moins un outil de moulage pouvant servir au moulage, et
un cadre de serrage (200), le cadre de serrage (200) étant adapté à serrer une portion de film (30) destinée à plastifier l'au moins un élément de substrat (20) ou à être moulée sur l'au moins un outil de moulage, le cadre de serrage (200) pouvant être déplacé d'une première position vers une deuxième position, étant entendu que
dans la première position, le cadre de serrage (200) est positionné par rapport au moule supérieur (130) de façon que la portion de film (30) serrée puisse être aspirée au moins partiellement dans le moule supérieur sous pression négative, et
dans la deuxième position, le cadre de serrage (200) est positionné par rapport au moule inférieur (130) de façon que la portion de film (30) serrée puisse être aspirée pour venir plastifier l'au moins un élément de substrat (20) ou être moulée sur l'outil de moulage du moule inférieur (110) sous pression négative.

2. Outillage de formage sous vide (10) selon la revendication 1, dans lequel le moule inférieur (110) est un moule fixe.

3. Outillage de formage sous vide (10) selon l'une quelconque des revendications précédentes, dans lequel le cadre de serrage (200) est conçu pour être déplacé vers une troisième position, la troisième position étant une position située à l'extérieur d'un espace intermédiaire formé par le moule supérieur (130) et le moule inférieur (110).

4. Outillage de formage sous vide (10) selon l'une quelconque des revendications précédentes, comprenant en outre un dispositif de chauffage (140), notamment un dispositif de chauffage IR, le dispositif de chauffage étant adapté à chauffer la portion de film (30) serrée.

5. Outillage de formage sous vide (10) selon l'une quelconque des revendications précédentes, dans lequel le cadre de serrage (200) est déplacé de la première vers la deuxième position par le moule supérieur (130), lorsque le moule supérieur se déplace de la position ouverte vers la position fermée.

6. Outillage de formage sous vide (10) selon l'une quelconque des revendications précédentes, comprenant en outre un organe d'entraînement de cadre de serrage, associé au cadre de serrage (200), l'organe d'entraînement de cadre de serrage étant adapté à déplacer le cadre de serrage de la première vers la deuxième et/ou la troisième position.

7. Outillage de formage sous vide (10) selon l'une quelconque des revendications précédentes, comprenant en outre une unité de commande, l'unité de commande étant adaptée à commander l'outillage pour réaliser les étapes suivantes de :
déplacement du moule supérieur (130) vers la position ouverte,
application d'une pression négative au moule supérieur (130) afin d'aspirer une portion de film (30), serrée par le cadre de serrage (200), au moins partiellement dans le moule supérieur (130) sous pression négative,
déplacement du moule supérieur (130) vers la position fermée et du cadre de serrage vers la deuxième position,
application d'une pression négative au moule inférieur (110) afin d'aspirer une portion de film (30) serrée par le cadre de serrage (200) de façon qu'elle vienne plastifier l'au moins un élément de substrat (20) ou qu'elle soit moulée sur l'outil de moulage du moule inférieur (110) sous pression négative.

8. Outillage de formage sous vide (10) selon l'une quelconque des revendications précédentes, dans lequel
le cadre de serrage (200) est un cadre de serrage tridimensionnel, et/ou
le cadre de serrage (200) comprend de multiples éléments de cadre de serrage (210, 220, 230, 240, 260), au moins un élément de cadre de serrage (240) étant mobile par rapport à un autre élément de cadre de serrage (210, 220, 230, 260) par translation et/ou par rotation.

9. Outillage de formage sous vide (10) selon l'une quelconque des revendications précédentes, dans lequel
l'outillage de formage sous vide (10) comprend en outre un dispositif de découpe (150), tel qu'un dispositif de poinçonnage, pour découper des excédents de portion de film après la plastification, ou le cadre de serrage (200) étant adapté à serrer une portion de film (30) consistant en une portion de film (30) à découpe précise, de façon qu'il n'y ait pas d'excédent de de portion de film après la plastification.

10. Outillage de formage sous vide (10) selon l'une quelconque des revendications précédentes, comprenant en outre
un dispositif d'application d'adhésif (160) permettant d'appliquer un adhésif sur l'au moins un élément de substrat (20) et/ou la portion de film (30),
ledit dispositif de d'application d'adhésif (160) pouvant comprendre au moins une buse (162, 164, 166) pour pulvériser de l'adhésif sur l'au moins un élément de substrat (20) et/ou la portion de film (30).

11. Outillage de formage sous vide (10) selon l'une quelconque des revendications précédentes, dans lequel le cadre de serrage comprend en outre
un organe de couplage destiné à être couplé à un guide et/ou à un organe d'entraînement.

12. Système de plastification par compression (1) pour la plastification sous vide ou le formage sous vide, le système de plastification par compression (1) comprenant
au moins un outillage de formage sous vide (10) selon l'une quelconque des revendications 1 à 10,
au moins un corps de base (112) destiné à recevoir le moule inférieur (110),
au moins un organe d'entraînement (132, 134) destiné à déplacer le moule supérieur (130) vers le moule inférieur (110), d'une position ouverte vers une position fermée, et éventuellement
au moins un guide destiné à guider le mouvement du cadre de serrage (200) de la première vers la deuxième position.

13. Système de plastification par compression (1) selon la revendication 12, comprenant en outre un dispositif de transport (170)
pour l'apport automatisé d'éléments de substrat (20) et/ou de portions de film (30), et/ou
pour l'enlèvement automatisé d'éléments de substrat plastifiés à l'aide du film (40).

14. Système de plastification par compression (1) selon la revendication 12 ou 13, le système comprenant en outre un système à vide pour mettre sous pression négative le moule inférieur (110) et le moule supérieur (130).

15. Procédé de plastification ou de formage sous vide utilisant un système de plastification par compression (1) selon l'une quelconque des revendications 12 à 14, le procédé comprenant les étapes suivantes de :
déplacement d'un moule supérieur (130) vers sa position ouverte,
serrage d'une portion de film (30) dans un cadre de serrage (200),
application éventuelle d'adhésif sur la portion de film (30) et/ou sur l'au moins un élément de substrat (20),
chauffage éventuel de la portion de film au moyen d'un dispositif de chauffage (140),
agencement d'au moins un élément de substrat (20) ou d'un outil de moulage sur le moule inférieur,
déplacement du cadre de serrage (200) vers la première position,
application d'une pression négative au moule supérieur (130) afin d'aspirer la portion de film (30), serrée par le cadre de serrage (200), au moins partiellement dans le moule supérieur (130) sous pression négative,
déplacement du moule supérieur (130) vers la position fermée,
déplacement du cadre de serrage (200) vers la deuxième position,
application d'une pression négative au moule inférieur (110) afin d'aspirer la portion de film (30) serrée par le cadre de serrage (200) de façon qu'elle vienne plastifier l'au moins un élément de substrat (20) supporté par le moule inférieur (110) sous pression négative, ou de façon qu'elle soit moulée sur l'au moins un outil de moulage du moule inférieur (110) sous pression négative,
plastification de l'au moins un élément de substrat par la portion de film serrée, ou moulage de la portion de film serrée sur l'au moins un outil de moulage,
déplacement du moule supérieur (130) hors de la position fermée,
découpe éventuelle des excédents de portion de film au moyen d'un dispositif de découpe (150) sur l'élément de substrat plastifié à l'aide du film (40) ou sur la partie de film moulée,
retrait éventuel de l'élément de substrat plastifié à l'aide du film (40) ou de la partie de film moulée du moule inférieur (110).
